# EUROPEAN PATENT SPECIFICATION

(11) **EP 1 560 365 B1**
(45) Date of publication and mention of the grant of the patent: **22.05.2013**
(21) Application number: 05009511.6
(22) Date of filing: 21.06.2000
(51) Int. Cl.: H04L 12/24, G05B 19/418, H04L 12/40, H04L 29/14, H04L 12/28

(54) **Block-oriented control system on high speed Ethernet**
Blockorientiertes Steuerungssystem im Hochgeschwindigkeits-Ethernet
Système de commande orienté bloc sur l'Ethernet à grande vitesse

(30) Priority: 21.06.1999 US 139814 P; 21.06.2000 US 598697
(43) Date of publication of application: 03.08.2005
(62) Divisional of application: 00941594.4
(73) Proprietor: Fieldbus Foundation, Austin, TX 78759 (US)
(72) Inventor: Glanzer, David A, Georgetown, TX 78628 (US); Corles, Colin Richard, Cave Creek, AZ 85331-9066 (US); Brodman, Stephen K, Needham, MA 02492 (US); Hawkins, William M, Boomington, MN 55438-1844 (US); Hirst, Michael D, Hudson, MA 01749 (US); Kozlik, Tony J, Phoenix, AZ 85027 (US); Neitzel, Lee A, Austin, TX 78759 (US); Sawyer, Raymond D., Raynham, MA 02767 (US); Tegnell, Johan I., Mansfield, MA 02048 (US)
(74) Representative: Strehl Schübel-Hopf & Partner

(56) References cited:
- HE J ; MAMMERI Z ; THOMESSE J P: "Clock synchronization in real-time distributed systems" SECOND IEEE WORKSHOP ON FUTURE TRENDS OF DISTRIBUTED COMPUTING SYSTEMS, 30 September 1990 (1990-09-30), - 2 October 1990 (1990-10-02) pages 135-141, XP002168838 Los Alamitos,
- LONN H ; SNEDSBOL R: "Synchronisation in safety-critical distributed Control Systems" IEEE FIRST INTERNATIONAL CONFERENCE ON ALGORITHMS AND ARCHITECTURES FOR PARALLEL PROCESSING (95TH0682-5), 19 April 1995 (1995-04-19), - 21 April 1995 (1995-04-21) pages 891-899, XP002168839
- OLSON A ; SHIN K G: "Probabilistic clock synchronization in large distributed systems" 11TH INTERNATIONAL CONFERENCE ON DISTRIBUTED COMPUTING SYSTEMS, 20 May 1991 (1991-05-20), - 24 May 1991 (1991-05-24) pages 290-297, XP002168840 Arlington, TX, USA

## Description

### TECHNICAL FIELD

The present invention relates to control system architecture. More particularly, the present invention relates to an open, interoperable distributed control system in a high performance network environment.

### BACKGROUND OF THE INVENTION

Automatic control systems are critical to all sectors of industry such as process control, discrete control, batch control (process and discrete combined), machine tool control, motion control, and robotics. One of the strongest needs in modern control systems is development and use of "open" and "interoperable" systems. Open, interoperable systems allow control devices made by different manufacturers to communicate and work together in the same system without the need for custom programming. "Fieldbus" is the common term used to describe these types of control systems.

The movement toward open, interoperable fieldbus systems is driven by device manufacturers and end users. Manufacturers want open, interoperable systems because it allows them to sell their products to more end users while reducing development costs. End users want open, interoperable systems so that they can select the best control devices for their system regardless of the device manufacturer.

There has also been a trend toward distribution of control functions into intelligent devices. In centralized control systems, a central controller performs all the control functions.

In distributed control systems, more than one control device operating in the system takes an active role in the control functions. Although both centralized and decentralized systems use a communication network, decentralized systems reduce overall system costs by reducing or eliminating the centralized controller functions between the control devices and the human-machine interface.

In order for distributed control systems to be truly open and interoperable, both the communications system and the user layer (above the communication system layers) must be specified and made open. One of the truly open and interoperable distributed systems is the fieldbus system provided by the Fieldbus Foundation. The FOUNDATION^{™} fieldbus user layer is described, e.g., in US Patent Application 08/916,178 (hereafter the "'178" application) filed August 21, 1997,entitled "BLOCK-ORIENTED CONTROL SYSTEM", and assigned to the assignee of the present application.

The lower speed 31.25 kilobits per second fieldbus (H1) used by the FOUNDATION™ fieldbus is described in part by International Electrotechnical Committee (IEC) Standard IEC 61158.

While the FOUNDATION™ fieldbus provides the open and interoperable solution for the H1 control capability, there is a great need to provide an open and interoperable solution for distributed control on a very high performance communication system typically called a fieldbus "backbone" network. The backbone network aggregates information from the lower speed control devices, e.g., the H1 and other control devices, which is used in supervisory and advanced control applications. The backbone is also needed for integration of control information into the enterprise's Management Information Systems (MIS).

One of the widely accepted standards for high performance communications signaling is Ethernet. Invented by Xerox in the 1970's, Ethernet has progressed from an initial speed of 10 Megabits per second, to 100 Megabits per second, to 1 Gigabit per second and beyond. Ethernet signaling is specified in an Institute of Electrical and Electronics Engineers (IEEE) standard (IEEE 802.3). Ethernet signaling is the underlying technology used by the Internet. The Internet protocols are specified by the Internet Engineering Task Force (IETF) and are issued as Request For Comment (RFC) specifications.

Although Ethernet/Internet technology provides the basic services for a high performance fieldbus backbone, it does not provide for all of the functions needed for use in distributed control systems. In particular, IEEE and IETF do not have suitable open and interoperable solutions for integration of distributed control systems (e.g., the H1 subsystem), system time synchronization, and fault tolerance.

The method of transferring information from lower speed fieldbuses to the Ethernet used by organizations such as Open DeviceNet^{™} Vendor Association, Inc., ("***Ether**Net*/***IP*,**") and PROFIBUS International, ("***PROFI***Net") are not suitable for use in the high performance environment because they encapsulate the lower speed protocol packets in an Ethernet frame. This method, known as "tunneling," is common in centralized control systems, but is inadequate for high performance distributed control systems. Although simpler to specify, tunneling would require too many Transport Control Protocol (TCP) connections with the resulting interrupt processing and memory overhead on the devices connected to the fieldbus backbone. In addition tunneling wastes much of the Ethernet bandwidth because the lower speed protocol packets (e.g., the H1 packets) are small and in many cases the Ethernet packet overhead would be bigger than a lower speed protocol packet.

Devices connected to the Ethernet must have a common sense of system time for time stamp and function block scheduling (control) purposes. For high performance distributed control, system time often needs to be accurate to within less than 1 millisecond. Heretofore, there is no known solution that provides this accuracy using the Commercial Off The Shelf (COTS) Ethernet equipment.

Fault tolerance of the Ethernet communication media and devices connected to the Ethernet is required for high performance distributed control applications. There is no known solution that provides the required fault tolerance using standard COTS Ethernet equipment. All of the prior attempts in providing the required fault tolerance require special Ethernet/Internet electronic hardware and/or software, and/or a non-standard "redundancy manager" device to be added to the Ethernet.

Thus, what is needed is an open, interoperable solution optimized for integration of distributed control systems and other control devices in a high performance fieldbus backbone.

What is also needed is an open, interoperable solution that provides system time synchronization suitable for distributed control applications operable over a high performance fieldbus backbone.

What is also needed is an open, interoperable solution that provides a fault tolerant high performance fieldbus backbone as well as fault tolerant devices that are connected to the fieldbus backbone.

J. He et al.: "Clock Synchronisation in Real-Time Distributed Systems based on FIP Field Bus", Second IEEE Workshop on Future Trends of Distributed Computing Systems, 1990, pages 135 to 141, disclose a technique for synchronising physical clocks in a field bus system. The precharacterising part of claim 1 starts out from this prior art.

H. Lönn et al.: "Sychronisation in Safety-Critical Distributed Control Systems", IEEE First International Conference on Algorithms and Architectures for Parallel Processing, 1995, pages 891 to 899, disclose a daisy chain method for synchronising clocks of a distributed computer system.

### SUMMARY OF THE INVENTION

The invention overcomes the shortcomings described above, by an apparatus and a method as defined in claims 1 and 6. The dependent claims relate to preferred embodiments of the invention.

Embodiments of the present invention relate to a distributed control system, which operates on a high performance backbone, e.g., the standard COTS Ethernet and Internet technology. The embodiments of the present invention are collectively referred to herein as the "High Speed Ethernet" (HSE). HSE includes the features of the distributed control system described by the '178 application and FOUNDATION™ fieldbus specifications (which are listed in Appendix A as the Reference Set 1), and further includes three new protocols described in the supporting specifications thereof, which are listed in Appendix A as the Reference Set 2. In particular, the new protocols are referred to herein as: the HSE Field Device Access (FDA) Agent, the HSE System Management Kernel (SMK), and the HSE Local Area Network Redundancy Entity (LRE).

The HSE FDA Agent allows System Management (SM) and Fieldbus Message Specification (FMS) services used by the H1 devices to be conveyed over the Ethernet using standard Internet User Data Protocol (UDP) and Transport Control Protocol (TCP). This allows HSE Devices on the Ethernet to communicate to H1 devices that are connected via a "HSE Linking Device." The HSE FDA Agent is also used by the local Function Block Application Process (FBAP) in a HSE Device or HSE Linking Device. Thus, the HSE FDA Agent enables remote applications to access HSE Devices and/or H1 devices through a common interface.

The HSE SMK ensures that system level functions in each device are coordinated. These functions include system time, addition and removal of devices from the network, and function block scheduling. HSE SMK uses local clock that operates to keep a local time, and keeps the difference between the local time and a system time provided by a time server within a value specified by the time sync class (See Reference Set 1 of Appendix A herein). The local time is used to time stamp events so that event messages from devices may be correlated across the system. Local time is also used to schedule the execution of the local function blocks.

HSE fault tolerance is achieved by operational transparency i.e., the redundancy operations are not visible to the HSE applications. This is necessary because HSE applications are required to coexist with standard MIS applications. The HSE LRE coordinates the redundancy function. Each HSE Device periodically transmits a diagnostic message representing its view of the network to the other HSE Devices on its Ethernet interfaces (commonly called Ethernet "Ports"). Each device uses the diagnostic messages to maintain a Network Status Table (NST), which is used for fault detection and Ethernet transmission port selection. There is no central "Redundancy Manager". Instead, each device determines how it should behave in response to faults it detects.

### BRIEF DESCRIPTION OF THE DRAWINGS

Features and advantages of the present invention will become apparent to those skilled in the art from the following description with reference to the drawings, in which:
Figure 1 is a block diagram showing an exemplary embodiment of a high performance distributed control system in accordance with the principles of the present invention;
Figure 2 is a block diagram showing an exemplary embodiment of device system architecture of a high performance distributed control system in accordance with the principles of the present invention;
Figure 3 is a block diagram showing an exemplary embodiment of the structure of the High Speed Ethernet Management Information Base of the device system architecture shown in Figure 2;
Figure 4 is a block diagram showing an exemplary embodiment of the device system architecture shown in Figure 2, showing the various local interfaces of the High Speed Ethernet Field Device Access agent;
Figure 5 is a block diagram showing an exemplary embodiment of the relevant portions of the high performance distributed control system involved in time synchronization process in accordance with the principles of the present invention;
Figure 6 is a flow diagram illustrative of an exemplary embodiment of the process of time synchronization in accordance with an embodiment of the principles of the present invention;
Figure 7A is a timing diagram illustrative of a starting time offset before the time synchronization process in accordance with an embodiment of the principles of the present invention;
Figure 7B is a timing diagram illustrative of a starting time offset after the time synchronization process in accordance with an embodiment of the principles of the present invention; and
Figure 8 is a block diagram showing an exemplary embodiment of the redundant topology of a high performance distributed control system in accordance with the principles of the present invention.

### DETAILED DESCRIPTION OF THE PREFERRED EMBODIMENT

For simplicity and illustrative purposes, the principles of the present invention are described by referring mainly to exemplary embodiments, particularly, with specific exemplary implementations of distributed control system in an Ethernet network. However, one of ordinary skill in the art would readily recognize that the same principles are equally applicable to, and can be implemented in, other implementations and designs using any other high speed networks.

### A: HSE DISTRIBUTED CONTROL SYSTEM OVERVIEW

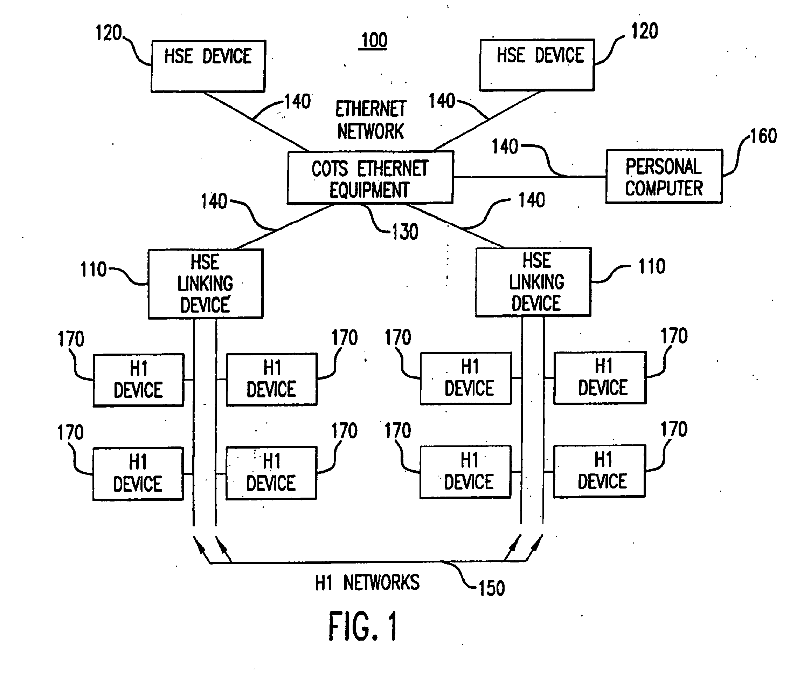

Referring to FIG. 1, an example of a high performance control system **100** is shown where standard COTS Ethernet equipment **130** is used to interconnect HSE Linking Devices **110** and HSE Devices **120** to an Ethernet Network **140.** The HSE Linking Devices **110** in turn connect to H1 Devices **170** using H1 Networks **150.** Other types of equipment such as a Personal Computer (PC) **160** may also be connected to the Ethernet Network **140.**

The actual Ethernet network topology and COTS Ethernet equipment configuration will depend on the particular application needs. However any Ethernet network topology or configuration using standard COTS Ethernet equipment other than the exemplary topology shown in Fig. 1 may be used.

### A.1: HSE SYSTEM ARCHITECTURE

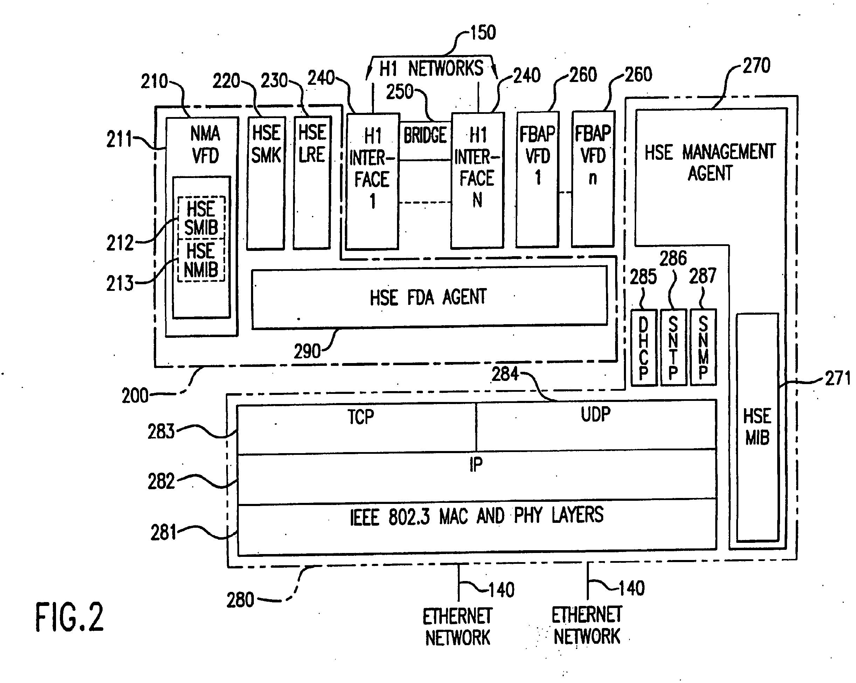

The HSE system architecture in accordance with an embodiment of the principles of the present invention is shown in FIG. 2. The HSE system architecture is designed to meet the functional needs of the high performance distributed manufacturing and process control environments, e.g., in a high speed Ethernet network. It permits distributed automation systems to be constructed from various control and measurement devices manufactured by different vendors. The HSE system architecture is described by architecture components that have been adapted to the specifics of both the H1 and HSE environments.

The various protocols and standards referenced in the following disclosure are described in detail in the manuals and specifications listed in Appendix A herein, which are available from the Fieldbus Foundation, a not-for-profit organization headquartered in Austin, Texas, and the respective current versions as of the filing date of the present invention of all of which are hereby incorporated by reference in their entirety herein. Each of the architecture components of the HSE system architecture (shown in Fig. 2) will now be described in more detail.

### A.2: Function Block Application Process Virtual Field Device (FBAP VFD)

Application Process (AP) is a term defined by the International Standards Organization (ISO) Open Systems Interconnect (OSI) Reference Model (RM), ISO 7498, to describe the portion of a distributed application that is resident in a single device. The term is used in the following description to refer to the entities within a device that performs a related set of functions, such as function block processing, network management, and system management.

Virtual Field Device (VFD) is a term defined by the Fieldbus Foundation (See Fieldbus Message Specification FF-870 listed in Reference Set 1 in Appendix A herein). A VFD makes the parameters of an AP visible to a communication network.

In accordance with the principles of the present invention, the HSE system architecture (shown in Fig. 2) supports the Function Block Application Process Virtual Field Device (FBAP VFD) **260.** The FBAP VFD **260** provides a common means for defining inputs, outputs, algorithms, control variables, and behavior of the automation system. There may be multiple FBAP VFDs **260**, e.g., n FBAP VFDs as shown, in a device in order to satisfy the particular needs an application. The FBAP VFD may or may not be present in an HSE Device or HSE Linking Device. If the HSE FBAP VFD is present, the device is sometimes also referred to as a "HSE Field Device." In the following descriptions, however, the FBAP VFD is to be assumed to be present in the HSE Device and HSE Linking Device, even if the term "HSE Field Device" is not used.

A standard set of function block classes and parameters are defined by the Fieldbus Foundation, e.g., in one or more of the specifications listed in Appendix A herein. Manufacturers of control devices may append their own parameters to the standard set of parameters to accommodate additional function block definitions as new requirements are discovered, and as technology advances. A more detailed description of the function block classes and parameters may be found, e.g., in Function Block Application Process-Part 1 Specification FF-890 listed in Reference Set 1 of Appendix A herein.

### A.3: H1 Interface

Each H1 Network **150** attached to a HSE Linking Device **110** (shown in FIG. 1) requires a H1 Interface **240.** The Bridge **250** is used to convey H1 Network messages directly between other H1 Interfaces **240** within the same HSE Linking Device **110** (shown in FIG. 1). A HSE Linking Device may comprise, e.g., a HSE Device **120** (shown in FIG. 1) that includes at least one H1 Interface **240.**

A more detailed description of a H1 Interface may be found in the Fieldbus Message Specification FF-870, Fieldbus Access Sublayer Specification FF-821, Data Link Services and Data Link Protocol Specifications FF-821, 822, and Data Link Protocol Specification for Bridge Operation Addendum FF-806, all of which are listed in the Reference Set 1 of Appendix A herein.

### A.4: Ethernet/Internet Stack

The HSE system architecture uses a standard COTS Ethernet/Internet ("stack") **280** for communication with other devices on the Ethernet Network **140.** The Ethernet/Internet stack used by HSE consists of Distributed Host Control Protocol (DHCP) **285,** Simple Network Time Protocol (SNTP) **286,** and Simple Network Management Protocol (SNMP) **287**, which in turn use Transport Control Protocol (TCP) **283** and User Data Protocol (UDP) **284** services.

TCP **283** and UDP **284** in turn use the standard Internet Protocol (IP) **282** services, which uses the standard IEEE Ethernet 802.3 Media Access Control (MAC) and Physical (PHY) Layers **281.** The PHY layer in **281** connects to one or more Ethernet Networks **140.**

The Internet DHCP, SNTP, SNMP, TCP, UDP and IP protocols are specified by the Internet Engineering Task Force (IETF) Request For Comment (RFC) specifications. The IETF RFCs are listed in Appendix B herein. An Institute of Electrical and Electronics Engineers (IEEE) standard (IEEE 802.3) describes the Ethernet MAC and PHY layers. The specific use of each layer and protocol are detailed in the Ethernet Presence Specification FF-586 listed in Reference Set 2 of Appendix A herein.

By preserving the standard use of the Ethernet/Internet stack, the HSE system architecture ensures interoperability among the different stack manufacturers.

### A.5: HSE Management Agent

Again referring to FIG. 2, in general, the HSE Management Agent **270** uses DHCP **285** for acquiring an IP address for the device, SNTP **286** for maintaining time synchronization with a time server, and SNMP **287** for managing the TCP, UDP, and IP protocol layers. HSE Management Agent use of DHCP, SNTP and SNMP is routine and complies with standard practices known to those familiar with the Internet protocols, e.g., according to IEEE 802.3.

The HSE Management Agent uses SNMP **287** for managing the Internet layer protocols. Specifically, the HSE Management Agent **270** provides Ethernet Network access to the standard Management Information Base-II (MIB II) as defined by SNMPv2 in RFC 1213 and RFC 1643 (see Appendix B), and as defined also by Ethernet Presence FF-586 listed in Reference Set 2 of Appendix A herein.

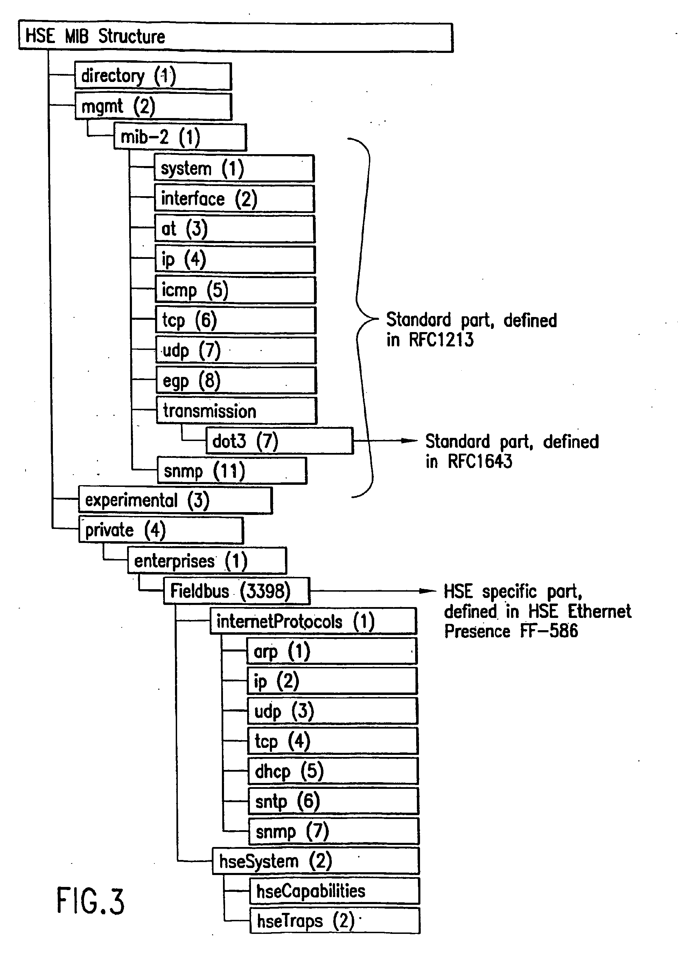

In accordance with an embodiment of the present invention, in order to comply with the ISO standards, the HSE Management Information Base (HSE MIB) **271** comprises of a standard part, which is the second version of MIB-II as defined in RFC 1213 and a HSE specific part (which is defined under the private enterprises level). For convenience in understanding, the detailed structure of the HSE MIB **271** is shown in FIG. 3. The standardized structure of the HSE MIB **271** provides a profile allowing interoperability, making the device appear as a well-behaved node.

### B: HSE Core

Referring again to FIG. 2, the HSE core portion **200** of the HSE system architecture identifies the new HSE capability in accordance with the principles of the present invention. The HSE core **200** provides the essential capabilities and integration needed to realize the high performance distributed control using HSE Devices, HSE Linking Devices and standard COTS Ethernet equipment.

### B.1: Network Management Agent Virtual Field Device

The HSE System Architecture includes a Network Management Agent VFD (NMA VFD) **210** for each HSE Device and each HSE Linking Device. The NMA VFD provides means for configuring, controlling and monitoring HSE Device and HSE Linking Device operation from the network.

Management information is contained in the Network Management Information Base (NMIB) **213** and the System Management Information Base (SMIB) **212.** Using the configuration management capabilities of the NMA VFD, parameters are set in the NMIB and SMIB to support data exchanges with other devices in the system. This process involves defining the transfers between devices and then selecting the desired communications characteristics to support the transfers.

The NMA VFD can also be configured to collect performance and fault related information for selected transfers. This information is accessible during run-time, making it possible to view and analyze the behavior of device communications. If a problem is detected, performance is to be optimized, or device communications are to be changed, then reconfiguration can be performed dynamically while the device is still operating.

NMA VFD parameters and behavior are further defined in the HSE Network Management Specification FF-803 listed in the Reference Set 2 of Appendix A herein.

### B.2: HSE Field Device Access Agent

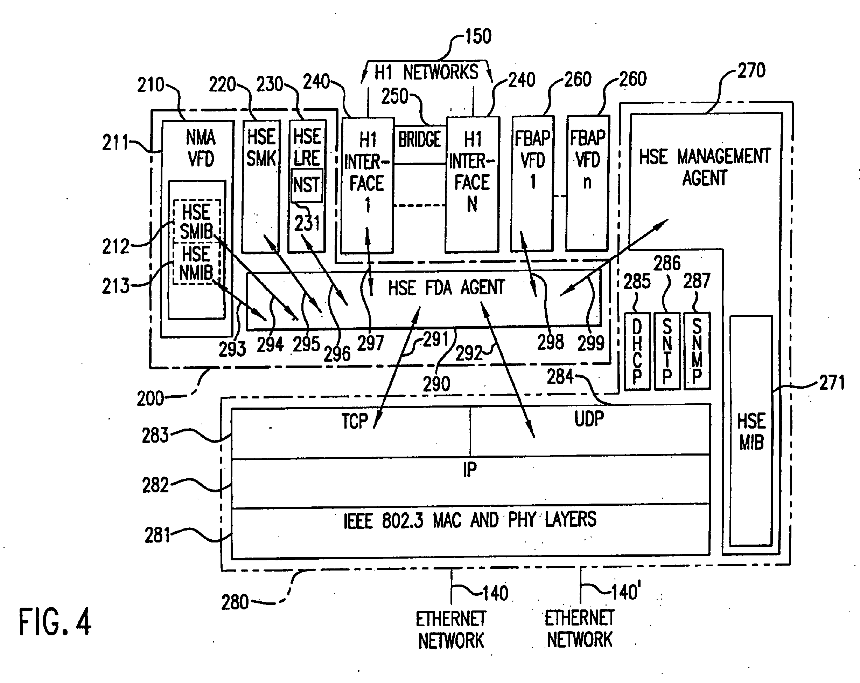

The HSE Field Device Access (FDA) Agent will now be described with References to FIG. 4, which is the same figure as FIG. 2 except that Local Interactions (**291-299**) for the HSE Field Device Access (FDA) Agent **290** are shown. The operation of the HSE FDA Agent will now be described in terms of these local interactions.

One of the main functions of the HSE FDA Agent **290** is to map services already defined for FOUNDATION™ fieldbus System Management (SM) (*See* FF-880 listed in the Reference Set 1 of Appendix A herein) and Fieldbus Message Specification (FMS) (See FF-870 listed in the Reference Set 1 of Appendix A herein) to and from the standard, COTS Ethernet/Internet **280** component.

Generally, the HSE FDA Agent **290** emulates the mapping defined by the FOUNDATION™ fieldbus Fieldbus Access Sublayer specification (See FF-875 listed in the Reference Set 1 of Appendix A herein). The HSE FDA Agent **290** provides the common interface that enables remote applications to access devices of any type on both the H1 Networks **150** and the HSE Network **140.**

Thus the HSE FDA Agent **290** in accordance with the principles of the present invention allows systems to be constructed where the control is distributed in into various HSE Devices and/or H1 Devices, and any combinations thereof, as needed by the particular end user application.

### B.2.1: HSE FDA Agent Local Interfaces

**B.2.1(a): Local Interface 291: TCP -** The TCP local interface **291** allows the HSE FDA Agent **290** to send and/or receive FMS messages using TCP **283**. TCP **283** provides interfaces modeled as sockets through which the HSE FDA Agent **290** submits a buffer that contains one or more messages.

**B.2.1(b): Local Interface 292: UDP -** The UDP local interface **292** allows the HSE FDA Agent **290** to send and/or receive SM messages and certain FMS messages using UDP **284.** UDP **284** provides interfaces modeled as sockets through which the HSE FDA Agent **290** submits a buffer that contains one or more messages.

**B.2.1(c): Local Interface 293: HSE NMIB -** The HSE FDA Agent **290** provides a local interface to the HSE NMIB **213** in NMA VFD **210.** The HSE FDA Agent is capable of providing configuration and read-only access to NMA VFD **210** via the HSE NMIB Local Interface **293.**

**B.2.1(d): Local Interface 294: HSE SMIB -** The HSE FDA Agent **290** provides a local interface to the HSE SMIB **212** in NMA VFD **210.** The HSE FDA Agent **290** is capable of providing configuration and read-only access to NMA VFD **210** via the HSE SMIB Local Interface **294.**

**B.2.1(e): Local Interface 295: HSE SMK -** The HSE FDA Agent **290** conveys HSE SM services to and from the HSE SMK **220** through the HSE SMK local interface **295.** In accordance with an embodiment of the present invention, in a HSE Linking Device, the HSE SMK **220** communicates locally with each of the H1 interfaces **240,** and does not use the HSE FDA Agent **290**.

**B.2.1(f): Local Interface 296: HSE LRE -** The HSE FDA Agent **290** maintains a local interface with the HSE LAN Redundancy Entity (HSE LRE) **230** of the device through the HSE LRE local interface **296.** Use of the HSE LRE local interface **296** will be described in more detail later.

**B.2.1(g): Local Interface 297: H1 Interface -** Only HSE FDA Agents **290** of a HSE Linking Device interact with the H1 Interface(s) **240** to access H1 Networks **150.** The H1 local interface provides the HSE FDA Agent with FMS and SM access through the HSE SMK **220.**

The HSE FDA Agent forwards FMS requests and responses received from the TCP Interaction **291** and UDP Interaction **292** to H1 Network **150** through the H1 Interface(s) **240.** The HSE FDA Agent also forwards H1 requests and responses received from a H1 Network through the H1 Interface Interaction **297** to the Ethernet Network **140** using TCP Interaction **291** and UDP Interaction **292.**

Thus, the HSE FDA Agent **290** interacts with the services in the H1 Network in the same manner as any other application program would normally interact with the H1 network.

**B.2.1(h): Local Interface 298: FBAP VFD -** The HSE FDA Agent **290** uses the FBAP VFD local interface **298** to access the FBAP VFD **260.** Both FMS and SM messages are communicated using the FBAP VFD local interface **298.**

**B.2.1(i): Local Interface 299: HSE Management Agent -** The HSE FDA Agent **290** maintains the HSE Management Agent local interface **299** with the HSE Management Agent **270** to access certain Quality of Service parameters associated with its UDP/TCP connections. The use of these parameters by the HSE FDA Agent **290** is local to the specific UDP/TCP implementation.

### B.2.2: HSE FDA Agent Operation

Again referring to FIG. 4, during the configuration of the system, HSE SMK **220** uses the local interface **295** for adding HSE and/or H1 devices to, and deleting the same from, the distributed system. An exchange of SM messages is used to identify new (or to be deleted) HSE and/or H1 Devices in the system.

For example, after a new HSE Device receives an Internet Protocol (IP) address, the new HSE Device periodically announces its presence on the Ethernet network **140.** HSE Linking Devices also announce changes detected on their H1 Network **150.** In a similar way, HSE SMK uses the local interface **295** to determine the location of the function block "tags" that might exist in the HSE Devices and/or H1 Devices.

During operation of the system, the data acquisition, display and supervisory control functions, which are typically executing on a Personal Computer (PC) connected to the Ethernet Network **140,** will need to access the data in a HSE Device, a HSE Linking Device and/or H1 devices connected to the H1 Networks **150.** The data access is typically performed using the "Client/Server" and/or the "Publisher/Subscriber" messages. These data access methods are well known to those familiar with Fieldbus messaging.

For Client/Server and Publisher/Subscriber messages originating or terminating in the HSE Device and/or HSE Linking Device, the HSE FDA Agent **290** sends and receives the Ethernet Network **140** messages on the local interface **291,** provides the appropriate mapping to FMS services as previously described above, and uses local interfaces **293, 294, 296, 298,** and **299** to access the HSE NMIB **213**, HSE SMIB **212**, HSE LRE **230**, FBAP VFD(s) **260** and the HSE Management Agent **270,** respectively. HSE SMK **220** is not accessed because it has its own SM messages as previously described.

For Client/Server, Publisher/Subscriber and/or SM messages originating or terminating in the H1 Network **150,** the HSE FDA Agent **290** uses local interface **297** to send and/or receive messages from H1 Interface(s) **240**.

If the messages from the H1 network **150** are to/from the Ethernet Network **140,** and are Client/Server or Publisher/Subscriber messages, HSE FDA Agent **290** uses the FMS mapping and local interface **291.** If the H1 messages to/from the Ethernet Network **140** are SM messages, the HSE FDA Agent uses the SM mapping and local interface **292.**

If the messages to/from H1 Network **150** are to/from the HSE Linking Device, and are Client/Server or Publisher/Subscriber messages, HSE FDA Agent will use FMS mapping and the appropriate local interface (except the local interfaces **291** and **292**).

If the messages to/from H1 Network **150** are to/from the HSE Linking Device, and are SM messages, HSE FDA Agent will use SM mapping and the appropriate local interface (except the local interfaces **291** and **292**).

### B.3: HSE System Management Kernel

Referring again to FIG. 2, the HSE system architecture includes a HSE System Management Kernel (SMK) **220** for each HSE device and/or each HSE linking device. The HSE SMK **220** maintains information and a level of coordination that provides an integrated network environment for the execution and interoperation of the FBAP VFD **260.**

As previously discussed, HSE SMK **220** provides for routine configuration of certain basic system information prior to device operation. For example HSE SMK startup takes a device through a set of predefined phases for this purpose. During this procedure a system configuration device recognizes the presence of the device on the network and configures basic information into the HSE SMIB **212.** Once the device receives its basic configuration information, its HSE SMK brings it to an operational state without affecting the operation of other devices on the network. It also enables the HSE FDA Agent **290** for use by other functions in the device.

### B.3.1: HSE SMK System Time Synchronization

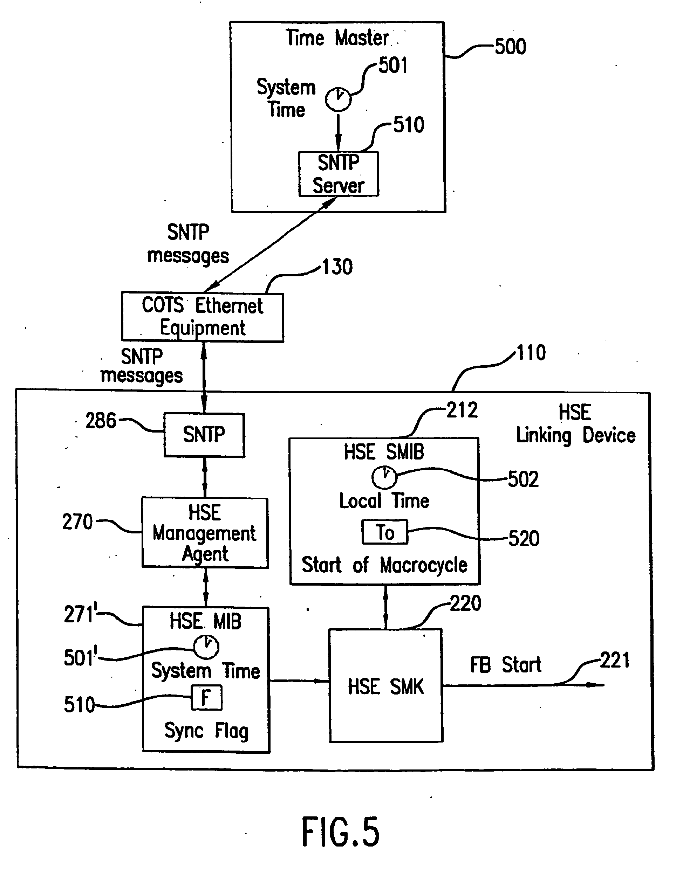

Now referring to FIG. 5, the HSE Management Agent **270** in HSE Linking Device **110** uses SNTP **286** to interact with remote SNTP Server **510** in Time Master **500** to synchronize System Time **501'** in HSE MIB **271'** with System Time **501** in the Time Master **500.** When System Time **501'** is synchronized with System Time **501,** Sync Flag (F) **510** in the HSE MIB is set to true by the standard SNTP protocol. The Time Master and the HSE Linking Device are interconnected using standard, COTS Ethernet equipment **130.** This synchronization protocol is defined in IETF RFC 2030.

At any moment, Local Time **502** in HSE SMIB **212** may or may not be synchronized with System Time **501'.** In order to coordinate execution of function blocks in a distributed system, and to provide proper time stamping of function block alarms, Local Time **502** must be Synchronized with System Time **501**'.

All of the function blocks are synchronized with Start of Macrocycle, "T₀" **520** in HSE SMIB **212**. Each HSE Linking Device and HSE Device in the system has the same value for To. A function block is executed when HSE SMK **220** locally issues a Function Block (FB) Start **221** message for the block. Each FB Start message is generated based on an offset from T₀.

At the start of the macrocycle, To and the offset for each block is based on Local Time **502.** Therefore each device must adjust their Local Time **502** to equal the System Time **501'** for the system to function properly. However, because each device has a hardware clock oscillator that is not perfect, Local Time **502** will eventually drift out of synchronization with System Time **501'.**

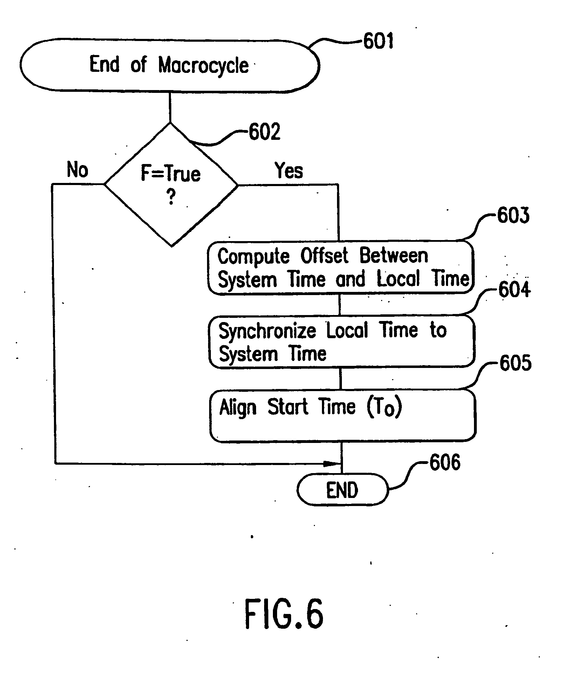

Fig. 6 shows the process of correcting for the drift in accordance with an embodiment of the present invention. In particular, when a macrocycle ends in step **601,** the HSE SMK **220** will test the Sync Flag **510** in HSE MIB **271'** in step **602.** If F **510** is not true, the process ends in step **606.**

If, on the other hand, it is determined in step **602** above that F **510** is true, HSE SMK **220** computes the offset between Local Time **502** and System Time **501'** in step **603,** and sets the Local Time **502** to equal the System Time **501'** within a value specified in a desired time sync class (See Reference Set 1 of Appendix A herein)in step **604.**

Once the Local Time **502** is synchronized, in step **605,** the start time (To) **520** (shown in FIG. 5) is aligned with start time of other devices.

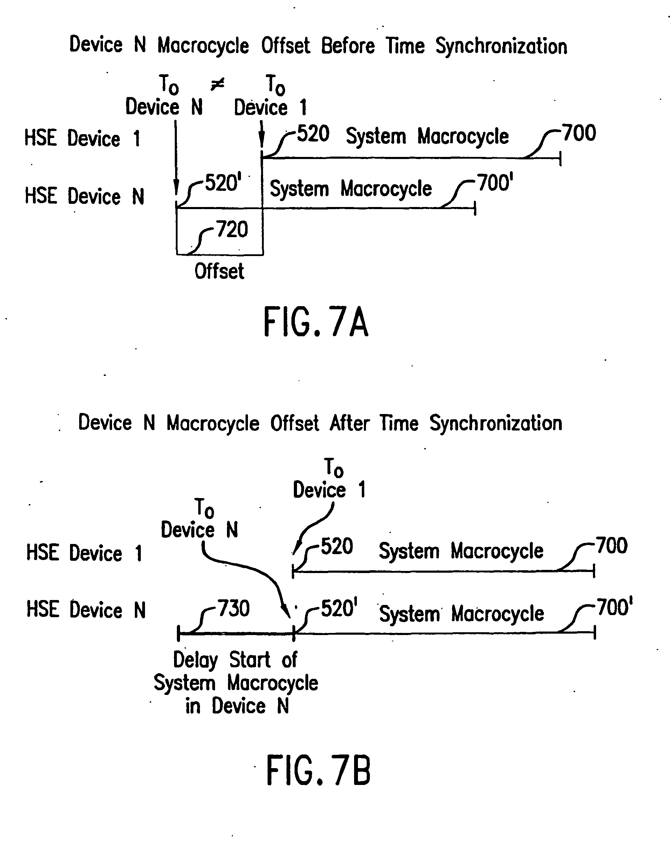

The start time alignment will now be described with references to FIGs. 7A and 7B. FIG. 7A shows the macrocycle offset of a device, e.g., device N, before the time synchronization, in which the offset **720** represents the error that must be corrected in the HSE Device N. As shown, the HSE Device N now has the correct Local Time, but the start time(To) 520' of System Macrocycle **700'** is not aligned with other devices in the distributed system.

FIG. 7B shows the macrocycle offset of a device, e.g., device N, after the time synchronization. The HSE SMK **220** of the Device N delays the start time (T₀) **520'** of the System Macrocycle 700' by Offset **720** so that the System Macrocycle begins at the same time(T₀) **520** as, e.g., System Macrocycle **700** in HSE Device 1. HSE Device N System Macrocycle is now synchronized with the System Time, and the synchronization process ends at step **606** (shown in FIG. 6).

### B.4: Local Area Network Redundancy Entity

Referring to FIG. 4, each HSE Device and HSE Linking Device has a HSE Local Area Network (LAN) Redundancy Entity (HSE LRE) **230.** The HSE LRE provides fault tolerance to single failure through the use of redundancy.

HSE LRE periodically sends and receives Redundancy Diagnostic Messages over local interface **296.** HSE FDA Agent **290** maps the Diagnostic messages on local interfaces **291** and **292** (See HSE Redundancy Specification FF-593 listed in the Reference Set 2 of Appendix A herein for the Redundancy Diagnostic Message Formats.)

The Redundancy Diagnostic Messages are sent concurrently on Ethernet Network **140** and Ethernet Network **140'.** Each device receives the Redundancy Diagnostic Messages on Ethernet Network **140** and Ethernet Network **140'** and constructs a local Network Status Table (NST) **231.** The NST provides detailed status on the condition of every HSE device connected to Ethernet Network **140** and Ethernet Network **140'.** The HSE LRE **230** controls which Ethernet Network **140** or **140'** the HSE Device will use for message transmission.

With this method, all of the network transmission and device switchover decisions are distributed into the HSE Devices and the system uses standard, COTS Ethernet equipment.

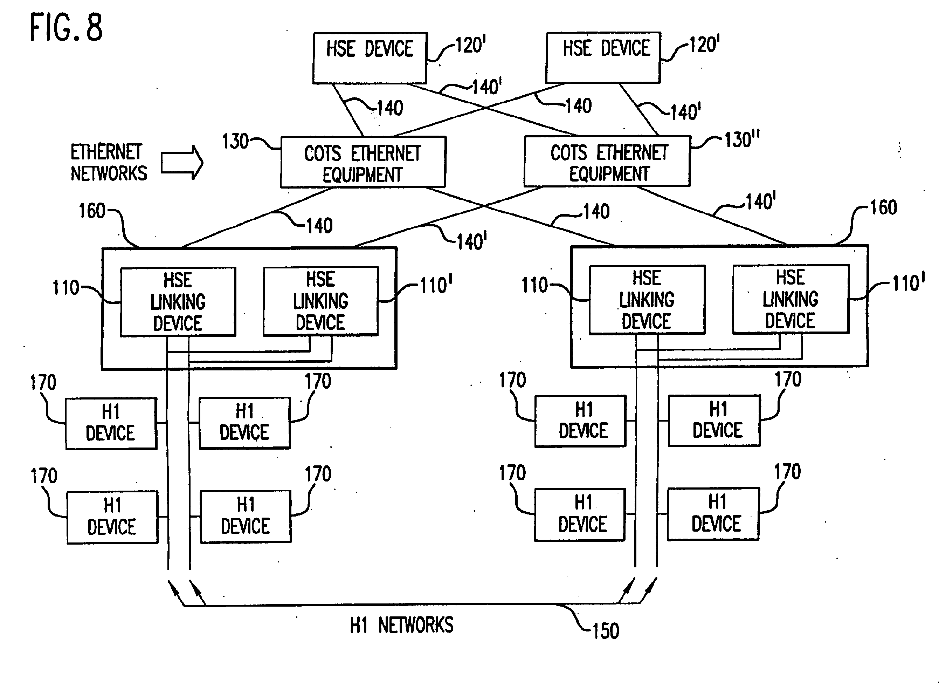

FIG. 8 illustrates the general topology supported by the redundancy aspect of the present invention. The topology shown is only an example, showing one of many possible topologies. Any topology may be used as long as behavior of the equipment providing Ethernet Networks **140** and **140'** is standard, COTS Ethernet equipment.

HSE redundancy supports both Ethernet Network redundancy and HSE Linking Device redundancy.

### B.4.1: Ethernet Network Redundancy

Referring to FIG. 8, HSE Devices **120'** and HSE Linking Device Pairs **110'** have interfaces to both Ethernet Network **140** and Ethernet Network **140'.** In this example, Ethernet Network **140** is provided by COTS Ethernet equipment **130** and Ethernet Network **140'** is provided by COTS Ethernet equipment **130'.** A single failure of any one of the Ethernet Networks or one of the Ethernet interfaces on a HSE device would cause the HSE LRE previously described to force communications on the remaining functional network.

### B.4.2: HSE Linking Device Redundancy

The HSE LRE **230** supports HSE Linking Device redundancy. Redundant HSE Linking Device Pair **160** comprises primary HSE Linking Device **110,** and standby HSE Linking Device **110'.** H1 Devices **170** are connected by H1 Networks **150** to the Redundant HSE Linking Device Pair **160.** If primary HSE Linking Device **110** fails, standby HSE Linking Device **110'** will assume control. A HSE device **120'** may be made redundant in the same manner as the HSE linking device **110,** except in a HSE device H1 interface(s) is (are) not present.

The present invention provides the necessary diagnostic message format to allow an open and interoperable switch-over of the redundant high speed Ethernet networks and/or the redundant HSE linking devices (or HSE devices).

The redundancy method for backup of each H1 Network is described in the '178 application, and by the specifications listed in Reference Set 1 of Appendix A herein.

As can be appreciated, the distributed control system architecture in the foregoing description provides an open, interoperable solution optimized for integration of distributed control systems and other control devices in a high performance backbone, provides an open, interoperable solution that provides system time synchronization suitable for distributed control applications operable over a high performance backbone, and provides an open, interoperable solution that provides a fault tolerant high performance backbone as well as fault tolerant devices that are connected to the backbone.

The preferred embodiments set forth above are to illustrate the invention and are not intended to limit the present invention. Additional embodiments and advantages within the scope of the claimed invention will be apparent to one of ordinary skill in the art.

Moreover, while the invention has been described with reference to the exemplary embodiments thereof, those skilled in the art will be able to make various modifications to the described embodiments of the invention without departing from the scope of the claims. The terms and descriptions used herein are set forth by way of illustration only and are not meant as limitations. In particular, although the method of the present invention has been described by examples, the steps of the method may be performed in a different order than illustrated or simultaneously. Those skilled in the art will recognize that these and other variations are possible within the scope of the following claims and their equivalents.

### APPENDIX A

### A.1 Reference Set 1

| **Number** | **Revision** | **Specification** |
|---|---|---|
| FF-801 | FS 1.4 | Network Management |
| FF-806 | FS 1.0 | Data Link Protocol - Bridge Operation Addendum |
| FF-821 | FS 1.4 | Data Link Services Subset |
| FF-822 | FS 1.4 | Data Link Protocol Subset |
| FF-870 | FS 1.4 | Fieldbus Message Specification |
| FF-875 | FS 1.4 | Fieldbus Access Sublayer |
| FF-880 | FS 1.4 | System Management |
| FF-890 | FS 1.4 | Function Block Application Process-Part 1 |

### A.2 Reference Set 2

| **Number** | **Revision** | **Specification** |
|---|---|---|
| FF-803 | FS 1.0 | HSE Network Management |
| FF-586 | FS 1.0 | HSE Ethernet Presence |
| FF-588 | FS 1.0 | HSE Field Device Access Agent |
| FF-589 | FS 1.0 | HSE System Management |
| FF-593 | PS 2.0 | HSE Redundancy |

### APPENDIX B

| **RFC Number** | **RFC Title** | |
|---|---|---|
| 768 | User Datagram Protocol (UDP) | |
| 791 | Internet Protocol (IP) | |
| | Amended by: | |
| | | IP Subnet Extensions, RFC 950 |
| | | IP Broadcast Datagrams, RFC 919 |
| | | IP Broadcast Datagrams with Subnets, RFC 922 |
| 792 | Internet Control Message Protocol (ICMP) | |
| 793 | Transport Control Protocol (TCP) | |
| 826 | Ethernet Address Resolution Protocol (ARP) | |
| 894 | Ethernet Framing of IP Datagrams over Ethernet | |
| 1042 | IEEE 802.2&3 Framing of IP Datagrams over Ethernet | |
| 1112 | Internet Group Management Protocol (IGMP) | |
| 1122 | Requirements for Internet Hosts -- Communication Layers | |
| 1155 | Structure and Identification of Management Information | |
| 1157 | Simple Network Management Protocol (SNMP) | |
| 1213 | Management Information Base-II (MIB II) | |
| 1533 | DHCP Options and BOOTP Vendor Extensions | |
| 1541 | Dynamic Host Configuration Protocol (DHCP) | |
| 1643 | Definitions of Managed Objects for the Ethernet-like Interface Types | |
| 2030 | Simple Network Time Protocol (SNTP) | |

## Claims

1. An open interoperable apparatus in a distributed control system, comprising:
a local time clock (502) for providing a local time for use within an apparatus in a distributed control system;
a system time clock (501, 501') for providing a system time across the distributed control system; and
a system management kernel (220) for synchronizing the local time clock with the system time clock,
**characterised in that** the system management kernel (220) is adapted to delay the start time of a macrocycle of a device in the distributed control system by an offset (720), to align it with the start time of the macrocycle for another device in the distributed control system.

2. The apparatus of claim 1, comprising:
a first network interface for communicating with a first network (140) having a communication protocol stack (280);
a device access agent (290) for mapping at least one legacy format service message of the distributed control system to a network format message compatible with the communication protocol stack; and
a system management kernel local interface (295) through which the device access agent communicates with the system management kernel.

3. The apparatus of any preceding claim, comprising a synchronization flag (510) indicating whether the system time clock (501') is synchronized with a global time of a master (500) of the distributed control system.

4. The apparatus of claim 3, further comprising:
a management information base (271) comprising the system time clock (501') and the synchronization flag (510); and
a system management information base (212) comprising the local time clock (502).

5. The apparatus of claim 1, comprising a time master (500) configured to generate a global time, wherein the system time clock (501') is periodically synchronized with the global time of the time master.

6. A method of synchronizing a plurality of device-specific local times and a system time in an open interoperable distributed control system, said plurality of device-specific local times being associated with respective ones of a plurality of devices (110, 120) in the open interoperable distributed control system, said method comprising:
detecting an end of a macrocycle (601) of a device;
providing a start time of a next macrocycle to each of said plurality of devices;
computing an offset (720) between each of said plurality of device-specific local times and said system time;
synchronizing each of said plurality of device-specific local times with said system time using said computed offset (720); and
aligning said plurality of device specific macrocycle start times with respect to each other so that said start times of the macrocycles of each of said plurality of devices coincide.

7. The method of synchronizing a plurality of device specific local times and a system time in accordance with claim 6, further comprising:
providing a time master (500) in said open interoperable distributed control system, said time master maintaining a global time;
determining whether said system time is synchronized with said global time; and
setting a synchronized flag (510) if it is determined that said system time is synchronized with said global time.

8. The method of synchronizing a plurality of device specific local times and a system time in accordance with claims 6 or 7, wherein said step of aligning said plurality of device-specific start times comprises:
computing an offset between each of said plurality of device-specific start times with respect to each other; and
adding a time delay to at least one of said plurality of deice-specific start times so that said start times of each of said plurality of devices coincide with respect to each other.

## Patentansprüche

1. Offene zusammenarbeitsfähige Vorrichtung in einem verteilten Steuersystem, aufweisend:
eine Lokalzeituhr (502) zum Liefern einer Lokalzeit zur Verwendung innerhalb einer Vorrichtung in einem verteilten Steuersystem,
eine Systemzeituhr (501, 501') zum Liefern einer Systemzeit über das verteilte Steuersystem hinweg, und
einen Systemverwaltungs-Kernel (220) zum Synchronisieren der Lokalzeituhr mit der Systemzeituhr,
**dadurch gekennzeichnet, dass** der Systemverwaltungs-Kernel (220) eingerichtet ist, die Startzeit eines Makrozyklus eines Geräts des verteilten Steuersystems um einen Versatz (720) zu verzögern, um sie auf die Startzeit des Makrozyklus für ein anderes Gerät in dem verteilten Steuersystem auszurichten.

2. Vorrichtung nach Anspruch 1, aufweisend:
ein erstes Netzwerk-Interface zur Kommunikation mit einem ersten Netzwerk (140), das einen Kommunikationsprotokollstapel (280) aufweist,
einen Gerätezugriffsagenten (290) zum Abbilden mindestens einer Dienstnachricht eines herkömmlichen Formats des verteilten Steuersystems auf eine Nachricht eines Netzwerkformats, die mit dem Kommunikationsprotokollstapel kompatibel ist, und
ein lokales Interface (295) für den Systemverwaltungs-Kernel, durch das der Gerätezugriffsagent mit dem Systemverwaltungs-Kernel kommuniziert.

3. Vorrichtung nach einem der vorhergehenden Ansprüche mit einem Synchronisationsflag (510), das angibt, ob die Systemzeituhr (501') mit der globalen Zeit eines Masters (500) des verteilten Steuersystems synchronisiert ist.

4. Vorrichtung nach Anspruch 3, weiterhin aufweisend:
eine Verwaltungsinformationsbank (271), die die Systemzeituhr (501') und das Synchronisationsflag (510) enthält, und
eine Systemverwaltungs-Informationsbank (212), die die Lokalzeituhr (502) enthält.

5. Vorrichtung nach Anspruch 1 mit einem Zeitmaster (500), der zur Erzeugung einer globalen Zeit eingerichtet ist, wobei die Systemzeituhr (501') periodisch mit der globalen Zeit des Zeitmasters synchronisiert wird.

6. Verfahren zum Synchronisieren mehrerer gerätespezifischer Lokalzeiten und einer Systemzeit in einem offenen zusammenarbeitsfähigen verteilten Steuersystem, wobei die gerätespezifischen Lokalzeiten entsprechenden einzelnen von mehreren Geräten (110, 120) im offenen zusammenarbeitsfähigen verteilten Steuersystem zugeordnet sind und wobei das Verfahren umfasst, dass
ein Ende eines Makrozyklus (601) eines Geräts erfasst wird,
den Geräten jeweils eine Startzeit eines nächsten Makrozyklus zur Verfügung gestellt wird,
jeweils ein Versatz (720) zwischen den gerätespezifischen Lokalzeiten und der Systemzeit berechnet wird,
die gerätespezifischen Lokalzeiten unter Verwendung des berechneten Versatzes (720) jeweils mit der Systemzeit synchronisiert werden, und
die gerätespezifischen Startzeiten eines Makrozyklus aufeinander ausgerichtet werden, so dass die Startzeiten der Makrozyklen der jeweiligen Geräte zusammenfallen.

7. Verfahren zum Synchronisieren mehrerer gerätespezifischer Lokalzeiten und einer Systemzeit entsprechend Anspruch 6, wobei
in dem offenen zusammenarbeitsfähigen verteilten Steuersystem ein Zeitmaster (500) zur Verfügung gestellt wird, der eine globale Zeit aufrechterhält,
bestimmt wird, ob die Systemzeit mit der globalen Zeit synchronisiert ist, und
ein Synchronisationsflag (510) gesetzt wird, wenn bestimmt wird, dass die Systemzeit mit der globalen Zeit synchronisiert ist.

8. Verfahren zum Synchronisieren mehrerer gerätespezifischer Lokalzeiten und einer Systemzeit gemäß Anspruch 6 oder 7, wobei der Schritt zum Ausrichten der gerätespezifischen Startzeiten beinhaltet, dass
ein Versatz zwischen den jeweiligen gerätespezifischen Startzeiten im Verhältnis zueinander berechnet wird, und
zu mindestens einer der gerätespezifischen Startzeiten eine Zeitverzögerung addiert wird, so dass die Startzeiten der jeweiligen Geräte im Verhältnis zueinander aufeinanderfallen.

## Revendications

1. Dispositif inter-opérationnel ouvert dans un système de commande distribué, comportant :
une horloge d'heure locale (502) servant à fournir une heure locale à utiliser dans un dispositif d'un système de commande distribué,
une horloge d'heure de système (501, 501') servant à fournir une heure de système dans tout le système de commande distribué, et
un noyau de gestion de système (220) pour synchroniser l'horloge d'heure locale avec l'horloge d'heure de système,
**caractérisé en ce que** le noyau de gestion de système (220) est adapté pour retarder l'heure de début d'un macrocycle d'un dispositif dans le système de commande distribué d'un décalage (720) pour l'aligner avec l'heure de début du macrocycle pour un autre dispositif dans le système de commande distribué.

2. Dispositif selon la revendication 1, comportant :
une première interface de réseau pour communiquer avec un premier réseau (140) ayant une pile de protocoles de communication (280),
un agent d'accès à un dispositif (290) pour transformer le au moins un message de service à format Legacy du système de commande distribué en message à format réseau compatible avec ladite pile de protocoles de communication, et
une interface locale de noyau de gestion de système (295) à travers laquelle l'agent d'accès à un dispositif communique avec le noyau de gestion de système.

3. Dispositif selon l'une quelconque des revendications précédentes, comportant un indicateur de synchronisation (510) indiquant si l'horloge d'heure de système (501') est synchronisée avec une heure globale d'un dispositif d'heure principal (500) du système de commande distribué.

4. Dispositif selon la revendication 3, comportant en outre :
une base d'informations de gestion (271) comportant l'horloge d'heure de système (501') et l'indicateur de synchronisation (510), et
une base d'informations de gestion de système (212) comportant l'horloge d'heure locale (502).

5. Dispositif selon la revendication 1, comportant d'un dispositif d'heure principal (500) configuré pour générer une heure globale, dans lequel l'horloge d'heure de système (501') est périodiquement synchronisée avec l'heure globale du dispositif d'heure principal.

6. Procédé de synchronisation d'une pluralité d'heures locales spécifiques à un dispositif et d'une heure de système dans un système de commande distribué inter-opérationnel ouvert, ladite pluralité d'heures locales spécifiques à un dispositif étant associées à des dispositifs respectifs parmi une pluralité de dispositifs (110, 120) dans le système de commande distribué inter-opérationnel ouvert, ledit procédé comportant les étapes consistant à :
détecter une fin d'un macrocycle (601) d'un dispositif,
fournir une heure de début d'un macrocycle suivant à chaque dispositif parmi ladite pluralité de dispositifs,
calculer un décalage (720) entre chaque heure de ladite pluralité d'heures locales spécifiques à un dispositif et ladite heure de système,
synchroniser chaque heure de ladite pluralité d'heures locales spécifiques à un dispositif avec ladite heure de système en utilisant ledit décalage calculé (720), et
aligner ladite pluralité d'heures de début de macrocycle spécifiques à un dispositif les unes par rapport aux autres de sorte que lesdites heures de début des macrocycles de chaque dispositif parmi ladite pluralité de dispositifs coïncident.

7. Procédé de synchronisation d'une pluralité d'heures locales spécifiques à un dispositif et d'une heure de système conformément à la revendication 6, comportant en outre les étapes consistant à :
fournir un dispositif d'heure principal (500) dans ledit système de commande distribué inter-opérationnel ouvert, ledit dispositif d'heure principal conservant une heure globale,
déterminer si ladite heure de système est synchronisée avec ladite heure globale, et
établir un indicateur synchronisé (510) si il est déterminé que ladite heure de système est synchronisée avec ladite heure globale.

8. Procédé de synchronisation d'une pluralité d'heures locales spécifiques à un dispositif et d'une heure de système conformément aux revendications 6 ou 7, dans lequel ladite étape d'alignement de ladite pluralité d'heures de début spécifiques à un dispositif comporte de :
calculer un décalage entre chaque heure de ladite pluralité d'heures de début spécifiques à un dispositif par rapport aux autres, et
ajouter un retard à au moins une heure parmi ladite pluralité d'heures de début spécifiques à un dispositif de sorte que lesdites heures de début de chaque dispositif parmi ladite pluralité de dispositifs coïncident entre elles.
